# EUROPEAN PATENT APPLICATION

(11) **EP 1 111 699 A1**
(43) Date of publication of application: **27.06.2001**
(21) Application number: 00127994.2
(22) Date of filing: 20.12.2000
(51) Int. Cl.: H01M 4/04, H01M 4/38, H01M 4/48, H01M 4/58, H01M 4/62

(54) **Method of producing negative electrode material, negative electrode, and non-aqueous electrolyte battery**

(30) Priority: 22.12.1999 JP 36506399
(71) Applicant: SONY CORPORATION, Tokyo (JP)
(72) Inventor: Yamada, Shinichiro, Shinagawa-ku, Tokyo (JP); Endo, Takuya, Shinagawa-ku, Tokyo (JP); Li, Guohua, Shinagawa-ku, Tokyo (JP); Tanizaki, Hiroaki, Sony Enerhytec Inc., Koriyama-shi, Fukushima (JP); Imoto, Hiroshi, Shinagawa-ku, Tokyo (JP)
(74) Representative: MÜLLER & HOFFMANN Patentanwälte

(57) **Abstract**

Disclosed are methods of safely producing a high quality negative electrode material composed of a mixture of a non-carbon material and a carbon material, a negative electrode using the negative electrode material, and a non-aqueous electrolyte battery using the negative electrode. The high quality negative electrode is produced by pulverizing and classifying each of the non-carbon material and the carbon material in an inert gas atmosphere, and further mixing them to each other in an inert gas atmosphere.

## Description

### BACKGROUND OF THE INVENTION

The present invention relates to methods of producing a negative electrode material composed of a mixture of a non-carbon material and a carbon material, a negative electrode using the negative electrode material, and a non-aqueous electrolyte battery using the negative electrode.

Recently, various portable electronic devices such as a camera integrated video tape recorder, a cellular phone, and a laptop computer have been widely available. These portable electronic devices have come to be further required to be reduced in size and weight, and to meet such a requirement, studies have been actively made to enhance the energy density of batteries, particularly, secondary batteries used as portable power sources of these portable electronic devices. In particular, lithium ion secondary batteries capable of acquiring a large energy density as compared with conventional non-aqueous electrolyte batteries such as a lead battery and a nickel-cadmium battery have been increasingly expected to be useful as the above portable power sources.

By the way, a carbon material such as difficult-graphitization carbon or graphite has been widely used as a negative electrode material used for lithium ion secondary batteries. This is because such a carbon material exhibits a relatively high charging/discharging capacity and realizes a good cycle characteristic.

Along with the recent tendency toward higher charging/discharging capacity, however, the above-described carbon material has become insufficient in charging/discharging capacity, and therefore, it has been required to develop a negative electrode material having a further improved performance. For example, studies have been made to develop a non-carbon (typically, silicon or tin) based negative electrode material having a higher charging/discharging capacity in place of the above-described carbon material, and further, studies have been made to develop a negative electrode material using a mixture of such a non-carbon material and a carbon material, a negative electrode using the negative electrode material, and a non-aqueous electrolyte battery using the negative electrode.

The above-described negative electrode material, negative electrode using the negative electrode material, and non-aqueous electrolyte battery using the negative electrode, however, have a problem that since powders of a non-carbon material and a carbon material used as the negative electrode material absorb moisture in atmospheric air during the production process, there may occur degradation of the quality and a danger of dust explosion and/or firing.

### SUMMARY OF THE INVENTION

An object of the present invention is to provide a high quality negative electrode material, a negative electrode using the negative electrode material, and a non-aqueous electrolyte battery using the negative electrode by safe methods.

To achieve the above object, according to the present invention, there is provided a method of producing a negative electrode material composed of a mixture of a non-carbon material and a carbon material, including the step of: pulverizing and classifying each of the non-carbon material and the carbon material in an inert gas atmosphere.

With this configuration, since each of the non-carbon material and the carbon material is pulverized and classified in an inert gas atmosphere poor in reactivity and incombustible, it is possible to prevent occurrence of firing of powders of the non-carbon material and the carbon material, and hence to safely produce the negative electrode material.

According to the present invention, there is also provided a method of producing a negative electrode material composed of a mixture of a non-carbon material and a carbon material, including the step of: mixing the non-carbon material and the carbon material in an inert gas atmosphere.

With this configuration, since the non-carbon material and the carbon material are mixed to each other in an inert gas atmosphere poor in reactivity and incombustible, it is possible to prevent occurrence of firing of powders of the non-carbon material and the carbon material, and hence to safely produce the negative electrode material.

According to the present invention, there is also provided a method of producing a negative electrode by applying a negative electrode black mix containing a negative electrode material composed of a mixture of a non-carbon material and a carbon material on a negative electrode collector and drying the negative electrode black mix, including the step of: applying the negative electrode black mix on the negative electrode collector and drying it in an inert gas atmosphere or a dry air atmosphere.

With this configuration, since the negative electrode black mix containing the negative electrode material composed of the mixture of the non-carbon material and the carbon material is applied on the negative electrode collector and is dried in an inert gas atmosphere or a dry air atmosphere, it is possible to prevent absorption of moisture in atmospheric air to the negative electrode material when the negative electrode black mix is applied on the negative electrode collector and is dried, and hence to produce the high quality negative electrode without degradation of the quality.

According to the present invention, there is also provided a method of producing a negative electrode using a negative electrode black mix containing a negative electrode material composed of a mixture of a non-carbon material and a carbon material, including the step of: hot-pressing the negative electrode black mix.

With this configuration, since the negative electrode black mix is hot-pressed, it is possible to prevent absorption of moisture in atmospheric air to the negative electrode material in the negative electrode black mix when the negative electrode black mix is pressed, and to uniformly bond the non-carbon material and the carbon material to each other, and hence to produce the high quality negative electrode without degradation of the quality.

According to the present invention, there is also provided a method of producing a non-aqueous electrolyte battery, including a positive electrode containing a lithium composite oxide; a negative electrode containing a negative electrode material composed of a mixture of a non-carbon material in or from which lithium is doped or released and a carbon material, the negative electrode being disposed opposite to the positive electrode; and a non-aqueous electrolyte interposed between the positive electrode and the negative electrode, the method including the step of: winding the negative electrode into a wound body in an inert gas atmosphere or a dry air atmosphere.

With this configuration, since the negative electrode is wound into a wound body in an inert gas atmosphere or a dry air atmosphere, it is possible to prevent absorption of moisture in atmospheric air to the negative electrode material when the negative electrode is wound, and hence to produce the high quality negative electrode without degradation of the quality.

According to the present invention, there is also provided a method of producing a non-aqueous electrolyte battery, including a positive electrode containing a lithium composite oxide; a negative electrode containing a negative electrode material composed of a mixture of a non-carbon material in or from which lithium is doped or released and a carbon material, the negative electrode being disposed opposite to the positive electrode; and a non-aqueous electrolytic solution used as a non-aqueous electrolyte interposed between the positive electrode and the negative electrode, the method including the step of: pouring the non-aqueous electrolytic solution in the non-aqueous electrolyte battery in an inert gas atmosphere or a dry air atmosphere.

With this configuration, since the non-aqueous electrolytic solution used as the non-aqueous electrolyte is poured in the non-aqueous electrolyte battery in an inert gas atmosphere or a dry air atmosphere, it is possible to prevent absorption of moisture in atmospheric air to the non-aqueous electrolytic solution when the non-aqueous electrolytic solution is poured in the non-aqueous electrolyte battery, and hence to produce the high quality negative electrode without degradation of the quality.

### BRIEF DESCRIPTION OF THE DRAWINGS

Fig. 1 is a sectional view showing one configuration example of a non-aqueous electrolyte secondary battery to which the present invention is applied; and

Fig. 2 is a sectional view showing one configuration example of a coin-type non-aqueous electrolyte secondary battery to which the present invention is applied.

### DETAILED DESCRIPTION OF THE PREFERRED EMBODIMENT

Hereinafter, a preferred embodiment of the present invention will be described with reference to the drawings.

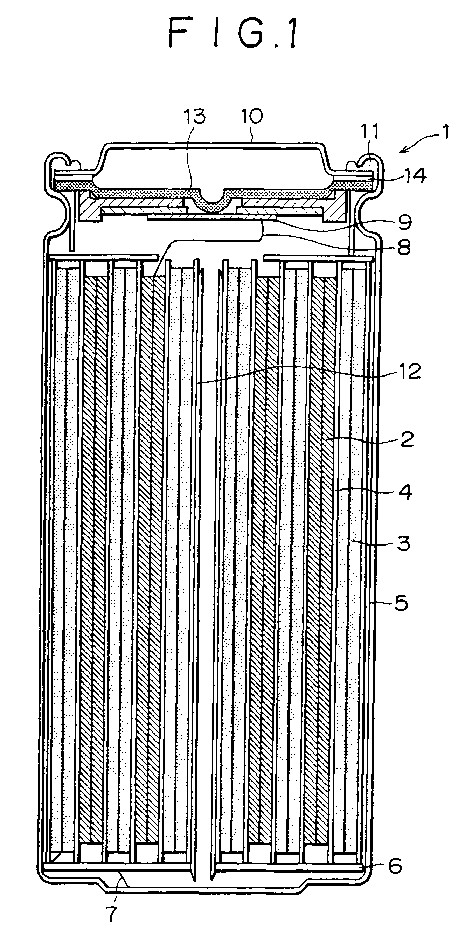

Fig. 1 is a vertical sectional view showing one configuration example of a non-aqueous electrolyte battery according to an embodiment of the present invention. Referring to Fig. 1, a non-aqueous electrolyte battery 1 is produced by closely stacking a film-like positive electrode 2 and a film-like negative electrode 3 with a separator 4 put therebetween and winding the stack to form a wound body, putting the wound body in a battery container 5, and pouring a non-aqueous electrolytic solution used as an electrolyte in the battery container 5.

The positive electrode 2 is produced by applying a positive electrode black mix containing a positive active material and a binder on a positive electrode collector, and drying the positive electrode black mix, to form a positive active material layer on the positive electrode collector. A metal foil, typically, an aluminum foil is used as the positive electrode collector.

The positive active material may be selected from metal oxides, metal sulfides, and specific polymers depending on the kind of battery to be produced.

For example, the positive active material used for lithium primary batteries may be selected from TiS₂, MnO₂, graphite, and FeS₂, and the positive active material used for lithium secondary batteries may be selected from metal sulfides and metal oxides such as TiS₂, MoS₂, NbSe₂, and V₂O₅.

Further, as the positive active material used for lithium secondary batteries, there may be used a lithium composite oxide expressed by a chemical formula LiₓMO₂ where M is one kind or more transition metals, and x is a value depending on a charging/discharging state and is generally in a range of 0.05≦x≦1.10. The transition metal M contained in the lithium composite oxide is preferably selected from Co, Ni, and Mn. Specific examples of the lithium composite oxides may include LiCoO₂, LiNiO₂, LiₓNi_{y}Co_{1-y}O₂ (x and y are values depending on the charging/discharging state of the battery, generally, 0<x<1 and 0.7<y<1.02), and LiMn₂O₄.

The above-described lithium composite oxide is capable of generating a high voltage, and therefore, it becomes a positive active material excellent in terms of energy density. A plurality of these positive active materials may be used in combination for the positive electrode 2.

The binder contained in the above-described positive electrode black mix may be a known binder generally used for a positive electrode black mix of a battery of this type, and a known additive may be added to the positive electrode black mix.

The negative electrode 3 is produced by applying a negative electrode black mix containing a negative active material and a binder on a negative electrode collector, and drying the negative electrode black mix, to form a negative active material layer on the negative electrode collector. A metal foil, typically, a copper foil is used as the negative electrode collector.

In the non-aqueous electrolyte battery 1 according to this embodiment, a mixture of a non-carbon material and a carbon material is used as the negative active material.

As the non-carbon material, there may be used a material forming, together with lithium, an alloy expressed by a chemical formula LiₓMM' where M and M' are elements other than Li and C, and x is in a range of x≧ 0.01. Specific examples of the non-carbon materials may include a silicon compound, a tin compound, an indium compound, and an aluminum compound.

If one of M and M' is an element (such as silicon, tin, indium or aluminum) forming, together with lithium, an alloy expressed by a chemical formula LiₓM or LiₓM' (M and M' are elements other than Li and C, and x is in a range of x≧0.01), then the other one of M and M' may be a non-carbon element being inactive with lithium.

The value x in the above chemical formula specified to be in the range of x≧0.01 as described above is preferably in a range of x≧0.1.

As the silicon compound, there may be used a compound expressed by a chemical formula MₓSi where M is an element other than Li and Si, for example, B, C, N, O, Na, Mg, Al, P, S, K, Ca, Ti, V, Cr, Mn, Fe, Co, Ni, Cu, Zn, Rb, Y, Mo, Rh, Pd, In, Sn, Cs, Ba, Ce, or Ta.

As the carbon material, there may be widely used a difficult-graphitization carbon material having a spacing between (002) planes in a range of 0.37 nm or more, a graphite based carbon material having a spacing between the (002) planes in a range of 0.340 nm or less, or an easy-graphitization carbon material.

Specific examples of the carbon materials may include pyrolytic carbons, cokes such as pitch coke, needle coke, petroleum coke, graphites, vitreous carbons, baked bodies of organic high polymer compounds, carbon fibers, and activated charcoals. Additionally, the above baked body of an organic high polymer compound is typically produced by baking phenol resin or furan resin at a suitable temperature so as to carbonize the resin.

The above-described carbon materials may be used singly or in combination. In particular, it may be desirable to use at least the difficult-graphitization carbon material, to which the easy-graphitization carbon material or graphite based carbon material may be added at a suitable mixing ratio.

In the non-aqueous electrolyte battery 1, a ratio of an average particle size R_{M} of the non-carbon material in the negative active material to an average particle size R_{C} of the carbon material in the negative active material is specified in a range of R_{M}/R_{C} ≦1. That is to say, the average particle size of the non-carbon material in the negative active material is made smaller than the average particle size of the carbon material in the negative active material. As a result, particles of the non-carbon material permeate gaps formed by particles of the carbon material having larger particle sizes.

To be more specific, according to the non-aqueous electrolyte battery 1 in this embodiment, in the negative electrode containing the non-carbon material and the carbon material, the gaps formed by particles of the carbon material having larger particle sizes are used as fields where lithium is doped or released in or from the non-carbon material. Since lithium is doped or released in or from the non-carbon material in the gaps formed by the particles of the carbon material, if there occurs a change in volume of the non-carbon material due to expansion or contraction of the non-carbon material when lithium is doped or released in or from the non-carbon material, then the change in volume of the non-carbon material can be absorbed by the gaps formed by the particles of the carbon material. As a result, it is possible to suppress a change in volume of the entire negative active material, and hence to significantly improve the cycle characteristic of the non-aqueous electrolyte battery 1.

If the ratio R_{M}/R_{C} is larger than 1, that is, the average particle size of the non-carbon material is larger than the average particle size of the carbon material, then a change in volume of the non-carbon material caused by doping or release of lithium in or from the non-carbon material cannot be absorbed by the carbon material. As described above, by specifying the ratio R_{M}/R_{C} in the range of 1 or less, it is possible to suppress a change in volume of the negative active material caused by doping or release of lithium in or from the non-carbon material, and hence to improve the cycle characteristic of the non-aqueous electrolyte battery 1.

The average particle size R_{C} of the carbon material contained in the negative active material is preferably in a range of about 10 *µ*m to 70 *µ*m. The shape of the carbon material is not particularly limited but may be selected from various shapes such as a granular shape and a flake shape.

The average particle size R_{M} of the non-carbon material contained in the negative active material is preferably in a range of about 20 *µ*m or less, more preferably, in a range of about 10 *µ*m or less.

The particle sizes and the average particle size of each of the carbon material and the non-carbon material will be described below. In this embodiment, the method of measuring the particle sizes and the average particle size of each of the carbon material and the non-carbon material is not particularly limited but may be any one of various known methods of measuring the sizes of particles having irregular shapes insofar as the ratio R_{M}/R_{C} is in the range of 1 or less.

For example, as the method of measuring the particle sizes, there may be adopted a method of sieving particles and determining the size of the particles on the base of the mesh of a sieve through which the particles do not pass, or a method of settling particles in a liquid, measuring the settling rate of the particles, and determining the size (Stokes' diameters) of the particles by using the Stokes' equation. In addition, the Stokes' diameter indicates a diameter of a spherical particle which has the same density as that of a sample particle and which is settled at the same setting rate as that of the sample particle under the same condition.

By the way, powders generally have a distribution of particles sizes, and if such powders having a distribution of particles sizes are regarded to be substantially the same as powders having uniform particle sizes R in term of an effect exerted on a certain phenomenon, then it is convenient to use the particle size R of the powders as the typical particle size thereof. The particle size R of powders is called an average particle size thereof. Accordingly, the determination of the average particle size of powders differs depending on the purpose of the powders. For example, the average particle size of powders may be determined, but not limited thereto, on the basis of an equation of ΣnR/Σn where R is the particle size of each particle and n is the number of particles.

With respect to the mixture of the non-carbon material and the carbon material, a ratio of a weight W_{M} of the non-carbon material to a weight W_{C} of the carbon material is preferably in a range of W_{M}/W_{C}≦1. The reason for this is as follows: namely, in the case where the existing ratio of the non-carbon material is more than 50%, even if there appears a change in volume of the non-carbon material due to expansion or contraction thereof caused by doping or release in or from the non-carbon material, then there is a possibility that the change in volume of the non-carbon material cannot be absorbed by the gaps of particles of the carbon material and thereby a change in volume of the entire negative active material cannot be suppressed. As a result, it fails to improve the cycle characteristic of the non-aqueous electrolyte battery 1.

The non-aqueous electrolytic solution is prepared by dissolving an electrolyte in a non-aqueous solvent.

The electrolyte may be a known electrolyte generally used for a battery of this type. Specific examples of the electrolytes may include lithium salts such as LiClO₄, LiAsF₆, LiPF₆, LiBF₄, LiB(C₆H₅)₄, CH₃SO₃Li, CF₃SO₃Li, LiCl, and LiBr.

The non-aqueous solvent may be a known non-aqueous solvent generally used for a non-aqueous electrolytic solution. Specific examples of the non-aqueous solvents may include propylene carbonate, ethylene carbonate, dimethyl carbonate, diethyl carbonate, 1,2-dimethoxy ethane, 1,2-diethoxy ethane, γ-butyrolactone, tetrahydrofuran, 2-methyl tetrahydrofuran, 1,3-dioxosilane, 4-methy-1,3-dioxosilane, diethyl ether, sulfolane, methyl sulfolane, acetonitrile, propionitrile, anisole, acetic ester, butyric ester, and propionic ester These non-aqueous solvents may be used singly or in combination.

The cycle characteristic of the non-aqueous electrolyte battery 1 is significantly improved by specifying a ratio in particle size between the silicon compound and the carbon material contained in the negative electrode, thereby suppressing a change in volume of the negative active material caused by doping or release of lithium in or from the silicon compound.

A method of producing the above-described non-aqueous electrolyte battery 1 will be described below.

The positive electrode 2 is produced by uniformly applying a positive electrode black mix containing a positive active material and a binder on a metal foil typically an aluminum foil as a positive electrode collector and drying the positive electrode black mix, to form a positive active material layer on a positive electrode collector. The binder of the positive electrode black mix may be a known binder, and a known additive may be added to the positive electrode black mix.

The negative electrode 3 is provided by pulverizing and classifying each of a non-carbon material and a carbon material to prepare a powder of the non-carbon material and a powder of the carbon material, mixing these powders with each other to produce a negative electrode material composed of the mixture of the non-carbon material and the carbon material, mixing a binder with the negative electrode material to produce a negative electrode black mix, uniformly applying the negative electrode black mix on a metal foil typically an aluminum foil as a negative electrode collector and drying the negative electrode black mix to form a negative active material layer on the negative electrode collector, and compressing the negative active material layer on the negative electrode collector by hot-pressing. The binder of the negative electrode black mix may be a known binder, and a known additive may be added to the negative electrode black mix.

The step of pulverizing and classifying each of the carbon material and the non-carbon material is performed in an inert gas atmosphere. As a result, it is possible to prevent occurrence of accidents such as dust explosion and firing, and hence to safely perform the pulverizing/classifying work.

The step of mixing the carbon material and the non-carbon material with each other is performed in an inert gas atmosphere. As a result, it is possible to prevent occurrence of accidents such as dust explosion and firing, and hence to safely perform the mixing work.

The step of applying the negative electrode black mix on the metal foil and drying the negative electrode black mix is performed in an inert gas atmosphere or a dry air atmosphere. As a result, it is possible to prevent the quality of the negative electrode 3 from being degraded due to absorption of moisture in atmospheric air to the negative electrode black mix and hence to produce the negative electrode 3 with a high quality and also the non-aqueous electrolyte battery 1 with a high quality. It should be noted that the dry air atmosphere means a state in which a dew point is -10°C or less.

The above-described hot-pressing is performed at a temperature of 60°C or more. Since the negative electrode black mix is compressed by hot-pressing to produce the negative electrode 3, it is possible to prevent the quality of the negative electrode 3 from being degraded due to absorption of moisture in atmospheric air to the negative electrode black mix and to uniformly bond the non-carbon material layer and the carbon material layer to each other. Accordingly, by compressing the negative electrode black mix by hot-pressing, it is possible to produce the negative electrode 3 with a high quality and also the non-aqueous electrolyte battery 1 with a high quality. The hot-pressing is preferably performed in an inert gas atmosphere or a dry air atmosphere. This makes it possible to further enhance the above-described hot-pressing effect. It should be noted that the dry air atmosphere means a state in which a dew point is -10°C or less.

The positive electrode 2 and the negative electrode 3 thus produced are closely stacked to each other with a separator 4, which is formed of typically a polypropylene film having fine pores, put therebetween, and the stack is spirally wound by several times, to form a wound body.

The step of stacking and winding the positive electrode 2, the separator 4, and the negative electrode 3 is performed in an inert gas atmosphere or a dry air atmosphere. As a result, it is possible to prevent the quality of the negative electrode 3 from being degraded due to absorption of moisture in atmospheric air to the negative electrode black mix, and hence to produce the negative electrode 3 with a high quality and also the non-aqueous electrolyte battery 1 with a high quality. It should be noted that the dry air atmosphere means a state in which a dew point is -10°C or less.

Next, an insulating plate 6 is inserted in a bottom portion of an iron made battery container 5 on the inner surface of which nickel plating is applied, and the wound body is contained in the battery container 5. For current collection of the negative electrode 3, one end of a negative electrode lead 7 made from typically nickel is crimped to the negative electrode 3 and the other end of the negative electrode lead 7 is welded to the battery container 5. As a result, the battery container 5, which is conducted to the negative electrode 3, functions as an external negative electrode of the non-aqueous electrolyte battery 1. For current collection of the positive electrode 2, one end of a positive electrode lead 8 made from typically aluminum is mounted to the positive electrode 2, and the other end of the positive electrode 2 is electrically connected to a battery lid 10 via a current shielding thin plate 9 for shielding a current depending on an inner pressure of the battery. As a result, the battery lid 10, which is conducted to the positive electrode 2, functions as an external positive electrode of the non-aqueous electrolyte battery 1.

A non-aqueous electrolytic solution prepared by dissolving an electrolyte in a non-aqueous solvent is poured in the battery container 5.

The step of pouring the non-aqueous electrolytic solution in the battery container 5 is performed in an inert gas atmosphere or a dry air atmosphere. As a result, it is possible to prevent the quality of the negative electrode 3 from being degraded due to absorption of moisture in atmospheric air to the non-aqueous electrolytic solution, and hence to produce the negative electrode 3 with a high quality and also the non-aqueous electrolyte battery 1 with a high quality. It should be noted that the dry air atmosphere means a state in which a dew point is -10°C or less.

The edge of the battery container 5 is then crimped on the battery lid 10 via an insulating sealing gasket 11 coated with asphalt, to fix the battery lid 10 to the battery container 5, thereby producing the non-aqueous electrolyte battery 1 having a cylindrical shape.

As shown in Fig. 1, the non-aqueous electrolyte battery 1 is further provided with a center pin 12 connected to the negative electrode lead 7 and the positive electrode lead 8, a safety valve device 13 for releasing a gas in the battery when an inner pressure of the battery becomes higher than a specific value, and a PTC element 14 for preventing the temperature rise in the battery.

In the above-described embodiment, the ratio in particle size between the non-carbon material and the carbon material in the negative active material of the non-aqueous electrolyte battery 1 is described; however, a ratio in weight between the non-carbon material and the carbon material may be specified.

To be more specific, a ratio of a weight W_{M} of the non-carbon material contained in the negative active material to a weight W_{C} of the carbon material contained in the negative active material is set at a value in a range of W_{M}/W_{C}≦1.

Since the weight of the carbon material is larger than that of the non-carbon material, even if there appears a change in volume of the non-carbon material due to expansion or contraction thereof caused by doping or release of lithium in or from the non-carbon material, then the change in volume of the non-carbon material can be absorbed by the carbon material having the weight larger than that of the non-carbon material. As a result, it is possible to suppress a change in volume of the entire negative active material and hence to significantly improve the cycle characteristic of the non-aqueous electrolyte battery 1.

If the ratio W_{M}/W_{C} is larger than 1, that is, the weight of the non-carbon material is larger than the weight of the carbon material, then a change in volume of the non-carbon material caused by doping or release of lithium in or from the non-carbon material cannot be absorbed by the carbon material. As described above, by specifying the ratio W_{M}/W_{C} in the range of 1 or less, it is possible to suppress a change in volume of the negative active material caused by doping or release of lithium in or from the non-carbon material, and hence to improve the cycle characteristic of the non-aqueous electrolyte battery 1.

In the above-described embodiment, description is made by example of the non-aqueous electrolyte battery 1 using the non-aqueous electrolytic solution in which the electrolyte is dissolved in the non-aqueous solvent; however, the present invention can be applied to a battery using an organic or inorganic solid electrolyte, a solid electrolyte dispersed in a high polymer matrix, or a gel-like solid electrolyte containing a swelling solvent.

The shape of the battery of the present invention is not particularly limited but may be selected from various shapes such as a cylindrical shape, a square shape, coin shape, or button shape, and the size of the battery of the present invention is not particularly limited but may be selected from various sizes such as a thin size and a large size.

The present invention will be more clearly understood by way of the following examples:

### (Inventive Example 1)

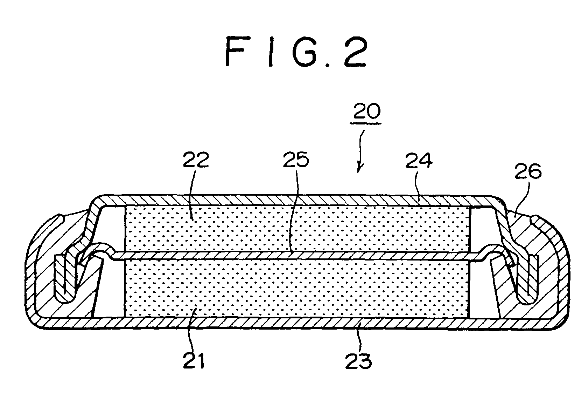

To confirm the effect of the present invention, a coin type non-aqueous electrolyte secondary battery 20 shown in Fig. 2 was produced, and the characteristic thereof was evaluated.

First, a positive electrode 21 was produced as follows:

LiCoO₂ as a positive active material was obtained by mixing 0.5 mol of lithium carbonate and 1 mol of cobalt carbonate, and baking the mixture for 5 hr in air at 900°C, The positive active material LiCoO₂ was pulverized and classified into a powder. Then, 91 parts by weight of LiCoO₂, 6 parts by weight of graphite as a conductive material, and 3 parts by weight of polyvinylidene fluoride as a binder were mixed, followed by adding N-methyl pyrolidone as a dispersant thereto, to produce paste. The paste was dried and formed into in a disk-like shape, to obtain the positive electrode 21.

A negative electrode 22 was produced as follows:

Petroleum pitch as a starting material was subjected to oxygen-crosslinking by introducing 10 to 20% of functional groups containing oxygen to the petroleum pitch, and the cross-linked petroleum pitch was baked in a flow of an insert gas at 1000°C, to obtain a difficult-graphitization carbon material having a property close to that of vitreous carbon. The difficult-graphitization carbon material thus obtained was subjected to X-ray diffraction analysis. As a result, it was found that a spacing between (002) planes was 3.76 A and the true specific gravity was 1.58 g/cm³.

The difficult-graphitization carbon material was pulverized into a powder (average particle size: 50 *µ*m) of a carbon material. On the other hand, a silicon compound (Mg₂Si) was pulverized and classified in a nitrogen atmosphere into a powder (average particle size: 5 *µ*m) of a non-carbon material. Then, 60 parts by weight of the carbon material, 30 parts by weight of the non-carbon material, and 10 parts by weight of polyvinylidene fluoride as a binder were mixed in a nitrogen atmosphere, followed by adding N-methyl pyrolidone as a dispersant thereto, to prepare a negative electrode black mix. The negative electrode black mix was uniformly applied on both surfaces of a nickel mesh (diameter of nickel fiber: 20 *µ*m) as a negative electrode collector and dried in a nitrogen atmosphere, to form a negative active material layer on the collector, and the negative active material layer was compressed on the collector in a nitrogen atmosphere by using a hot-pressing machine, to produce the negative electrode 22 having a disk-shape.

The positive electrode 21 was contained in a positive electrode container 23 made from aluminum, and the negative electrode 22 was contained in a negative electrode cup 24 made from a stainless steel (SUS304 specified in JIS). The positive electrode 21 and the negative electrode 22 were stacked to each other with a separator 25 made from polypropylene put therebetween.

A non-aqueous electrolytic solution was poured in the battery container composed of the positive electrode container 23 and the negative electrode cup 24 in atmospheric air. The non-aqueous electrolytic solution was prepared by dissolving LiPF₆ in a mixed solvent of 50 vol% of propylene carbonate and 50 vol% of diethyl carbonate at a concentration of 1.0 mol/L.

Subsequently, outer peripheral edges of the positive electrode container 23 and the negative electrode cup 24 were crimped to each other via a sealing gasket 26, to enclose the battery container composed of the positive electrode container 23 and the negative electrode cup 24, thereby producing a coin type non-aqueous electrolyte secondary battery 20 having a diameter 20 mm and a thickness of 2.5 mm.

### (Comparative Example 1)

An attempt was made to produce a coin type non-aqueous electrolyte secondary battery in the same manner as that described in Inventive Example 1, except that the silicon compound (Mg₂Si) was pulverized and classified in atmospheric air.

### (Comparative Example 2)

An attempt was made to produce a coin type non-aqueous electrolyte secondary battery in the same manner as that described in Inventive Example 1, except that the powder of the carbon material was mixed with the powder of the silicon compound (Mg₂Si) in atmospheric air.

In Inventive Example 1, the coin type non-aqueous electrolyte secondary battery was produced without occurrence of any accident. On the contrary, in Comparative Example 1, the powder of the silicon compound (Mg₂Si) was fired during pulverization of the silicon compound (Mg₂Si), thereby failing to produce the coin type non-aqueous electrolyte secondary battery, and in Comparative Example 2, the powder of the silicon compound (Mg₂Si) was fired during mixing of the powder of the carbon material with the silicon compound (Mg₂Si), thereby failing to produce the coin type non-aqueous electrolyte secondary battery.

As a result, it becomes apparent that by pulverizing and classifying the non-carbon material in an inert gas atmosphere, it is possible to prevent occurrence of firing of the metal powder constituting the non-carbon material and hence to safely perform the work of pulverizing and classifying the non-carbon material; and that by mixing a powder of the carbon material with a powder of the non-carbon material in an inert gas atmosphere, it is possible to prevent occurrence of firing of the metal powder constituting the non-carbon material and hence to safely perform the work of mixing the powder of the carbon material with the powder of the non-carbon material.

### (Inventive Example 2)

A coin type non-aqueous electrolyte secondary battery was produced in the same manner as that described in Inventive Example 1, except that the negative electrode black mix was applied on both the surfaces of the nickel mesh (diameter of nickel fiber: 20 *µ* m) and dried in a dry air atmosphere having a dew point of -20°C.

### (Comparative Example 3)

A coin type non-aqueous electrolyte secondary battery was produced in the same manner as that described in Inventive Example 1, except that the negative electrode black mix was applied on both the surfaces of the nickel mesh (diameter of nickel fiber: 20 *µ*m) and dried in atmospheric air.

The charging/discharging characteristics of the coin type non-aqueous electrolyte secondary batteries in Inventive Examples 1 and 2 and Comparative Example 3 were evaluated in accordance with the following evaluation method.

### Evaluation Method for Charging/discharging Characteristic

Each of the non-aqueous electrolyte secondary batteries was charged at a constant-current/constant-potential of 1 A to an upper limit of 4.2 V and was discharged at a constant current of 500 mA to a termination voltage of 0.0 V, and a charging/discharging efficiency (%) of each battery was obtained on the basis of a ratio of the charging capacity to the discharging capacity. In addition, the charging/discharging characteristic evaluation test was performed in an environment at 20°C.

The charging/discharging efficiencies of the coin type non-aqueous electrolyte secondary batteries in Inventive Examples 1 and 2 and Comparative Example 3 are shown in Table 1.

**Table 1**

| | Applying/drying Atmosphere | Charging/discharging Efficiency (%) |
|---|---|---|
| Inventive Example 1 | nitrogen atmosphere | 88 |
| Inventive Example 2 | dry atmosphere | 84 |
| Comparative Example 3 | atmospheric air | 67 |

As is apparent from Table 1, in each of the coin type non-aqueous electrolyte secondary batteries in Inventive Examples 1 and 2 in which the negative electrode black mix was applied and dried in an inert gas atmosphere and a dry air atmosphere, respectively, the charging/discharging efficiency is significantly improved as compared with the coin type non-aqueous electrolyte secondary battery in Comparative Example 3 in which the negative electrode black mix was applied and dried in atmospheric air. The reason for this may be considered as follows: namely, the step of applying and drying the negative electrode black mix in an inert gas atmosphere or a dry air atmosphere is effective to prevent occurrence of the inconvenience that the quality of the negative electrode is degraded due to absorption of moisture in atmospheric air to the negative electrode material and thereby the essential performance of the negative electrode material cannot be attained.

As a result, it becomes apparent that by applying and drying the negative electrode black mix in an inert gas atmosphere or a dry air atmosphere, it is possible to prevent the degradation of the quality of the negative electrode and hence to obtain a good charging/discharging characteristic.

### (Inventive Example 3)

A coin type non-aqueous electrolyte secondary battery was produced in the same manner as that described in Inventive Example 1, except that the negative electrode black mix was compressed by the hot-pressing machine in a dry air atmosphere having a dew point of-20°C.

### (Inventive Example 4)

A coin type non-aqueous electrolyte secondary battery was produced in the same manner as that described in Inventive Example 1, except that the negative electrode black mix was compressed by the hot-pressing machine in atmospheric air.

### (Comparative Example 4)

A coin type non-aqueous electrolyte secondary battery was produced in the same manner as that described in Inventive Example 1, except that the negative electrode black mix was compressed by a cold-pressing machine in atmospheric air.

The charging/discharging characteristics of the coin type non-aqueous electrolyte secondary batteries in Inventive Examples 3 and 4 and Comparative Example 4 were evaluated in accordance with the above-described evaluation method.

The charging/discharging efficiencies of the coin type non-aqueous electrolyte secondary batteries in Inventive Examples 1, 3 and 4 and Comparative Example 4 are shown in Table 2.

**Table 2**

| | Pressing Condition | Pressing Atmosphere | Charging/discharging Efficiency (%) |
|---|---|---|---|
| Inventive Example 1 | hot-pressing | nitrogen atmosphere | 91 |
| Inventive Example 3 | hot-pressing | dry air atmosphere | 90 |
| Inventive Example 4 | hot-pressing | atmospheric air | 88 |
| Comparative Example 4 | cold-pressing | atmospheric air | 74 |

As is apparent from Table 2, in each of the coin type non-aqueous electrolyte secondary batteries in Inventive Examples 1, 3 and 4 in which the negative electrode black mix was compressed by hot-pressing in an inert gas atmosphere, a dry air atmosphere, and atmospheric air, respectively, the charging/discharging efficiency is significantly improved as compared with the coin type non-aqueous electrolyte secondary battery in Comparative Example 4 in which the negative electrode black mix was compressed by cold-pressing in atmospheric air. The reason for this may be considered as follows: namely, the step of compressing the negative electrode black mix by hot-pressing is effective to prevent occurrence of the inconvenience that the quality of the negative electrode is degraded due to absorption of moisture in atmospheric air to the negative electrode material and thereby the essential performance of the negative electrode material cannot be attained. From the comparison between Inventive Examples 1, 3 and 4, it may be also considered that the compression of the negative electrode black mix by hot-pressing in an inert gas atmosphere or a dry air atmosphere is effective more than the compression of the negative electrode black mix by hot-pressing in atmospheric air.

As a result, it becomes apparent that by compressing the negative electrode black mix by hot-pressing, it is possible to prevent the degradation of the quality of the negative electrode and hence to obtain a good charging/discharging characteristic, and that by performing the hot-pressing in an inert gas atmosphere or a dry air atmosphere, it is possible to further increase the hot-pressing effect.

### (Inventive Example 5)

To confirm the effect of the present invention, a non-aqueous electrolyte secondary battery 1 shown in Fig. 1 was produced, and the characteristic thereof was evaluated.

First, a negative electrode 3 was produced as follows:

Petroleum pitch as a starting material was subjected to oxygen-crosslinking by introducing 10 to 20% of functional groups containing oxygen to the petroleum pitch, and the cross-linked petroleum pitch was baked in a flow of an insert gas at 1000°C, to obtain a difficult-graphitization carbon material having a property close to that of vitreous carbon. The difficult-graphitization carbon material thus obtained was subjected to X-ray diffraction analysis. As a result, it was found that a spacing between (002) planes was 3.76 Å and the true specific gravity was 1.58 g/cm³.

The difficult-graphitization carbon material was pulverized into a powder (average particle size: 50 *µ*m) of a carbon material. On the other hand, a silicon compound (Mg2Si) was pulverized and classified into a powder (average particle size: 5 *µ* m) of a non-carbon material. Then, 60 parts by weight of the carbon material, 30 parts by weight of the non-carbon material, and 10 parts by weight of polyvinylidene fluoride as a binder were mixed in a nitrogen atmosphere, to prepare a negative electrode black mix.

The negative electrode black mix was dispersed in N-methyl-2-pyrolidone into slurry. The slurry was uniformly applied on both surfaces of a strip-shaped copper foil (thickness: 10 *µ*m) as a negative electrode collector and dried, to form a negative active material layer on the collector, and the negative active material layer was compressed on the collector by using a pressing machine, to produce the negative electrode 3.

A positive electrode 2 was produced as follows:

LiCoO₂ as a positive active material was obtained by mixing lithium carbonate and cobalt carbonate at a mixing ratio of 0.5 mol:1 mol, and baking the mixture for 5 hr in air at 900°C.

Then, 91 parts by weight of LiCoO₂, 6 parts by weight of graphite as a conductive material, and 3 parts by weight of polyvinylidene fluoride as a binder were mixed, to prepare a positive electrode black mix.

The positive electrode black mix was dispersed in N-methyl-2-pyrolidone into paste. The slurry was uniformly applied on both surfaces of an aluminum foil (thickness: 20 *µ*m) as a positive electrode collector and dried, to form a positive active material layer on the collector, and the positive active material layer was compressed on the collector by a roll-pressing machine, to produce the positive electrode 2.

In a glove box kept in a nitrogen atmosphere, the positive electrode 2 and the negative electrode 3 thus produced were closely stacked to each other with a separator 4, formed of typically a polypropylene film having fine pores (thickness: 25 *µ*m), put therebetween, and the stack was spirally wound by several times, to form a wound body.

An insulating plate 6 was inserted in a bottom portion of an iron made battery container 5 on the inner surface of which nickel plating was applied, and the wound body was contained in the battery container 5. For current collection of the negative electrode 3, one end of a negative electrode lead 7 made from nickel was crimped to the negative electrode 3 and the other end of the negative electrode lead 7 was welded to the battery container 5. For current collection of the positive electrode 2, one end of a positive electrode lead 8 made from aluminum was mounted to the positive electrode 2, and the other end of the positive electrode 2 was electrically connected to a battery lid 10 via a current shielding thin plate 9 for shielding a current depending on an inner pressure of the battery.

A non-aqueous electrolytic solution, prepared by dissolving LiPF₆ in a mixed solvent of 50 vol% of propylene carbonate and 50 vol% of diethyl carbonate at a concentration of 1.0 mol/L, was poured in the battery container 5.

Finally, the edge of the battery container 5 was crimped on the battery lid 10 via an insulating sealing gasket 11 coated with asphalt, to fix the battery lid 10 to the battery container 5, thereby producing the non-aqueous electrolyte secondary battery having a cylindrical shape of about 18 mm in diameter and about 65 mm in height.

### (Inventive Example 6)

A non-aqueous electrolyte secondary battery was produced in the same manner as that described in Inventive Example 5, except that the electrode wound body was formed in a glove box kept in a dry air atmosphere having a dew point of - 20°C.

### (Comparative Example 5)

A non-aqueous electrolyte secondary battery was produced in the same manner as that described in Inventive Example 5, except that the electrode wound body was formed in atmospheric air.

The cycle characteristics of the non-aqueous electrolyte secondary batteries in Inventive Examples 5 and 6 and Comparative Example 5 were evaluated in the following evaluation method.

### Evaluation Method for Cycle Characteristic

Each of the non-aqueous electrolyte secondary batteries was charged at a constant-current/constant-potential of 1 A to an upper limit of 4.2 V and was discharged at a constant current of 500 mA to a termination voltage of 2.5 V. This charging/discharging cycle was repeated by 100 times. A discharging capacity retention ratio (%) at the 100^{th} cycle was obtained by a ratio of a discharging capacity at the 1^{st} cycle to a discharging capacity at the 100^{th} cycle. It should be noted that the cycle characteristic evaluation test was performed in an environment of 20°C.

The discharging capacity retention ratios of the non-aqueous electrolyte secondary batteries in Inventive Examples 5 and 6 and Comparative Example 5 are shown in Table 3. Additionally, with respect to the non-aqueous electrolyte secondary batteries in Inventive Examples 5 and 6 and Comparative Example 5, the initial capacities were nearly equal to each other.

**Table 3**

| | Winding Atmosphere | Discharging Capacity Retention Ratio (%) |
|---|---|---|
| Inventive Example 5 | nitrogen atmosphere | 95 |
| Inventive Example 6 | dry air atmosphere | 93 |
| Comparative Example 5 | atmospheric air | 78 |

As is apparent from Table 3, in each of the non-aqueous electrolyte secondary batteries in Inventive Examples 5 and 6 in which the electrode wound body was formed in an inert gas atmosphere and a dry air atmosphere, respectively, the discharging capacity retention ratio at the 100^{th} cycle is significantly improved as compared with the non-aqueous electrolyte secondary battery in Comparative Example 5 in which the electrode wound body was formed in atmospheric air. The reason for this may be considered as follows: namely, the step of forming the electrode wound body in an inert gas atmosphere or a dry air atmosphere is effective to prevent occurrence of the inconvenience that the quality of the negative electrode is degraded due to absorption of moisture in atmospheric air to the negative electrode material and thereby the essential performance of the negative electrode material cannot be attained.

As a result, it becomes apparent that by forming the electrode wound body in an inert gas atmosphere or a dry air atmosphere, it is possible to prevent the degradation of the quality of the negative electrode and hence to obtain a good cycle characteristic.

### (Inventive Example 7)

A non-aqueous electrolyte secondary battery was produced in the same manner as that described in Inventive Example 5, except that the non-aqueous electrolytic solution was poured in a dry air atmosphere having a dew point of -20°C.

### (Comparative Example 6)

A non-aqueous electrolyte secondary battery was produced in the same manner as that described in Inventive Example 5, except that the non-aqueous electrolytic solution was poured in atmospheric air.

The cycle characteristics of the non-aqueous electrolyte secondary batteries in Inventive Examples 5 and 7 and Comparative Example 6 were evaluated in the above-described evaluation method.

The discharging capacity retention ratios of the non-aqueous electrolyte secondary batteries in Inventive Examples 5 and 7 and Comparative Example 6 are shown in Table 4. Additionally, with respect to the non-aqueous electrolyte secondary batteries in Inventive Examples 5 and 7 and Comparative Example 6, the initial capacities were nearly equal to each other.

**Table 4**

| | Pouring Atmosphere | Discharging Capacity Retention Ratio (%) |
|---|---|---|
| Inventive Example 5 | nitrogen atmosphere | 97 |
| Inventive Example 7 | dry air atmosphere | 94 |
| Comparative Example 6 | atmospheric air | 81 |

As is apparent from Table 4, in each of the non-aqueous electrolyte secondary batteries in Inventive Examples 5 and 7 in which the non-aqueous electrolytic solution was poured in an inert gas atmosphere and a dry air atmosphere, respectively, the discharging capacity retention ratio at the 100^{th} cycle is significantly improved as compared with the non-aqueous electrolyte secondary battery in Comparative Example 6 in which the non-aqueous electrolytic solution was poured in atmospheric air. The reason for this may be considered as follows: namely, the step of pouring the non-aqueous electrolytic solution in an inert gas atmosphere or a dry air atmosphere is effective to prevent occurrence of the inconvenience that the quality of the non-aqueous electrolytic solution is degraded due to absorption of moisture in atmospheric air to the non-aqueous electrolytic solution and thereby the essential performance of the non-aqueous electrolytic solution cannot be attained.

As a result, it becomes apparent that by pouring the non-aqueous electrolytic solution in an inert gas atmosphere or a dry air atmosphere, it is possible to prevent the degradation of the quality of the non-aqueous electrolytic solution and hence to obtain a good cycle characteristic.

While the preferred embodiment of the present invention has been described using specific terms, such description is for illustrative purposes only, and it is to be understood that changes and variations may be made without departing from the spirit or scope of the following claims.

## Claims

1. A method of producing a negative electrode material composed of a mixture of a non-carbon material and a carbon material, comprising the step of:
pulverizing and classifying each of the non-carbon material and the carbon material in an inert gas atmosphere.

2. A method of producing a negative electrode material composed of a mixture of a non-carbon material and a carbon material, comprising the step of:
mixing the non-carbon material and the carbon material in an inert gas atmosphere.

3. A method of producing a negative electrode by applying a negative electrode black mix containing a negative electrode material composed of a mixture of a non-carbon material and a carbon material on a negative electrode collector and drying the negative electrode black mix, comprising the step of:
applying the negative electrode black mix on the negative electrode collector and drying the negative electrode black mix in an inert gas atmosphere or a dry air atmosphere.

4. A method of producing a negative electrode using a negative electrode black mix containing a negative electrode material composed of a mixture of a non-carbon material and a carbon material, comprising the step of:
hot-pressing the negative electrode black mix.

5. A method of producing a negative electrode according to claim 4, wherein said hot-pressing step is performed in an inert gas atmosphere or a dry air atmosphere.

6. A method of producing a non-aqueous electrolyte battery, including a positive electrode containing a lithium composite oxide; a negative electrode containing a negative electrode material composed of a mixture of a non-carbon material in or from which lithium is doped or released and a carbon material, said negative electrode being disposed opposite to the positive electrode; and a non-aqueous electrolyte interposed between the positive electrode and the negative electrode, said method comprising the step of:
winding the negative electrode into a wound body in an inert gas atmosphere or a dry air atmosphere.

7. A method of producing a non-aqueous electrolyte battery, including a positive electrode containing a lithium composite oxide; a negative electrode containing a negative electrode material composed of a mixture of a non-carbon material in or from which lithium is doped or released and a carbon material, said negative electrode being disposed opposite to the positive electrode; and a non-aqueous electrolytic solution used as a non-aqueous electrolyte interposed between the positive electrode and the negative electrode, said method comprising the step of:
pouring the non-aqueous electrolytic solution in the non-aqueous electrolyte battery in an inert gas atmosphere or a dry air atmosphere.
